# EUROPEAN PATENT APPLICATION

(11) **EP 4 545 183 A1**
(43) Date of publication of application: **30.04.2025**
(21) Application number: 23205315.7
(22) Date of filing: 23.10.2023
(51) Int. Cl.: B02C 1/00, B02C 1/14, B09B 3/35, B03B 9/06, B09B 101/50

(54) **DEVICE AND METHOD FOR REMOVING GLASS FROM A WINDOW**

(71) Applicant: WindowGlass Recycling Sweden AB, 335 31 Gnosjö (SE)
(72) Inventor: Larsson, Oscar, 33593 Åsenhöga (SE); Von Der Luft, Theodor, 335 72 Hestra (SE); Falk, Emil, 335 31 Gnosjö (SE)
(74) Representative: AWA Sweden AB

(57) **Abstract**

The present invention relates to a method and device for removing glass of a windowpane from a window. The glass removal device (1) comprises a glass removing module (20), a window receiving unit (10) configured to receive a window (2) with a windowpane (2b) and a plurality of glass crushing elements (22) arranged to said glass removing module. The glass crushing elements (22) are configured to crush a portion of said windowpane of the window, received on said window receiving unit, by movement of said glass crushing elements towards the windowpane (2b). Each glass crushing element (22) extends along a respective longitudinal direction (Z). At least one of the glass crushing elements is movable with respect to said glass removing module in the longitudinal direction between an extended position and a contracted position. The device further comprises at least one biasing element (24) configured to bias said at least one glass crushing element (22) towards the extended position, such that the glass crushing element is moved to the contracted position when a force beyond a threshold force is applied on the glass crushing element along said longitudinal direction.

## Description

### Technical field

The present invention relates to a device and method for removing glass in a windowpane from a window.

### Background

In order to save material and make communities and industries more sustainable there is a need to recycle more material. Today windowpane glass is recycled to a very small extent due to the difficulties in separating the window glass from the window frame on a larger scale. Even very small fractions of non-glass material together with crushed wasted glass may impair the possibilities of recycling since a very high purity is needed for the utilization thereof.

Consequently, there is a need of a solution by which windowpane glass may be efficiently recycled.

### Summary

It is an object of the present invention to provide a solution by which windowpane glass may be efficiently separated from a window frame.

The invention is defined by the appended independent claims, with embodiments being set forth in the appended dependent claims, in the following description and in the drawings.

According to a first aspect of the present invention there is provided a device for removing glass of a windowpane from a window. The device comprises a glass removing module, a window receiving unit configured to receive a window with a windowpane and a plurality of glass crushing elements arranged to said glass removing module. The glass crushing elements are configured to crush a portion of said windowpane of the window, received on said window receiving unit, by movement of said glass crushing elements towards the windowpane. Each glass crushing element extends along a respective longitudinal direction. At least one of the glass crushing elements is movable with respect to said glass removing module in the longitudinal direction between an extended position and a contracted position.

The device further comprises at least one biasing element configured to bias said at least one glass crushing element towards the extended position, such that the glass crushing element is moved to the contracted position when a force beyond a threshold force is applied on the glass crushing element along said longitudinal direction.

By the device windowpane glass may be removed from the window frame without removing substantive portions of the window frame itself. The window receiving unit may be any device which is able to receive a window. The window receiving unit may comprise a support surface for at least a portion of the window. The support surface may be, e.g., a conveyor belt which may transport the window to a position at which it may get into contact with a glass crushing element by movement of the glass crushing elements towards the window, or support elements on which the window may be received. At least one glass crushing element may crush a portion of the windowpane by movement of the glass removing module and/or the glass crushing elements such that at least one glass crushing element comes into contact with glass of the pane and a sufficient force is applied onto the windowpane to crush a portion of it. Some glass crushing elements may get into contact with the window frame instead of the windowpane. The biasing elements may then provide that the window frame is not damaged, but the glass crushing element may retract to the contracted position due to the force from the contact with the window frame. It may thereby be avoided that pieces of the window frame may be removed and mixed with the glass removed from the window frame. The biasing elements may be adapted such that said threshold force of the biasing elements is exceeded when a glass crushing element collides the window frame.

In one embodiment the glass crushing elements may be arranged in parallel with said longitudinal direction. The longitudinal extensions of the plurality of glass crushing elements may be in parallel to each other. The glass crushing elements may, thereby, be distributed along a line. A line perpendicular to the longitudinal directions. The plurality of glass crushing elements may be distributed sufficiently dense such that all glass, between two adjacent glass crushing elements, is crushed when said adjacent crushing elements hit the windowpane, considering the size of the portion of the windowpane that may be crushed by one single glass crushing element. Said size may depend on the force which the glass removing module applies through said glass crushing elements. The shape and material of the glass crushing elements and the size may be adapted for a specific type of windowpane, considering the type and thickness of the glass.

The windowpane may, e.g., be rectangular. Said line along which glass crushing elements are distributed may be longer than the width or length of the window. Thereby the outermost glass crushing elements along said line may hit the window frame by movement towards the windowpane or reach outside the window.

In one embodiment, the at least one glass crushing element is configured to, when colliding with the window frame during movement in said longitudinal direction, be displaced relative the glass removing module, by means of said biasing element. The force that is applied onto the window frame may be decreased through said movement of the glass crushing element. Thereby, said window frame may be preserved. Followingly, it may be avoided that any demolished frame portion is mixed with the crushed glass.

In one embodiment, said threshold force may be larger than the force acting to the glass crushing element by collision with said portion of glass of the windowpane. Thereby said portion of the windowpane may be crushed whereas the window frame may be preserved.

In one embodiment, said longitudinal direction may be a vertical direction. The window may be received horizontally in the window receiving unit. The glass removing module may be placed above the window receiving unit and the glass removing module may be moved downwards towards the windowpane until glass crushing elements of the device crush portions of the windowpane.

In one embodiment, said glass removing module may be movable in said longitudinal direction and at least one direction perpendicular to said longitudinal direction. In such manner, the glass removing module may move between different portions of the window. It may crush different portions of the windowpane by various movements into positions from where it may be moved towards said portions of the windowpane through movement in said longitudinal direction. In this embodiment, the windowpane may be fixed during movement of the glass removing module. In other embodiments, the window may alternatively or additionally be moved by means of the window receiving unit.

In one embodiment, said glass removing module may be movable in three perpendicular directions. In order to make sure all glass of the windowpane may be removed from the window, the glass removing module and/or the glass crushing elements may be moved, not only along the longitudinal direction of the glass crushing elements, but also in a plane perpendicular to the longitudinal direction. Between the crushing operations moving the glass crushing elements towards the window, the position of the glass crushing elements relative to the window may be changed in said plane. In the case of the window and windowpane being rectangular, the glass removing module may move both along the width and the length of said window and towards the window. An embodiment with such movement may be advantageous if the line along which the glass crushing elements is distributed is shorter than the width of the window.

In one embodiment, all of said plurality of glass crushing elements may be movable with respect to said glass removing module in said longitudinal direction. Thereby the window frame may be preserved, independently of which of the glass crushing elements it may be hit by, further decreasing the risk of crushing any piece of a window frame. This embodiment may further allow a greater variety of sizes and shapes of windows and corresponding window frames.

In one embodiment, said window receiving unit may comprise an opening configured to allow crushed glass to fall through. Glass crushed by any of the glass crushing elements may fall through said opening. The opening may be as large or almost as large as a windowpane which is to be crushed. The crushed glass may fall into, e.g., a container intended for glass which is to be recycled. The opening may be shaped and sized so that the window frame may not fall through the opening. The window receiving unit may further comprise several openings, e.g., between a plurality of bars or beams extending along or across a received window in order to support said window.

In one embodiment, the glass crushing elements may comprise a cylindrical portion configured to crush said portion of the windowpane. A cylindrical portion may be suitable to crush a large portion of a windowpane, given the applied force and size of the glass crushing element.

In one embodiment, the glass removing module may comprise a frame comprising a plurality of recesses configured to accommodate said plurality of glass crushing elements. The recesses may enhance appropriate orientation of the glass crushing elements. By means of the recesses the glass crushing elements may move between the extended and contracted state along said longitudinal direction without bending. Bending may be undesirable and decrease the efficiency of the glass crushing elements. The recess unit may thereby increase the durability of the glass crushing elements.

In one embodiment, the at least one glass crushing element may comprise a stop portion configured to stop an extension movement of said element when said stop element reaches said recess. The stop portion may set the limit for the extension of the glass crushing elements. By said limit, all glass crushing elements may be equally extended until a force is applied to any of said glass crushing elements, e.g., by collision with a window frame. This embodiment may be advantageous for the efficiency of the device, since the glass crushing elements which hit the windowpane may hit it substantially simultaneously. Moreover, it may be good for the durability of the device since permanent mutual deviation of extension of the glass crushing elements may cause damage to the device, e.g., through collision between the glass crushing elements and the window receiving unit.

In one embodiment, the at least one biasing element may be a gas spring. By means of the gas spring of the plurality of glass crushing elements, the threshold force may be adjustable, e.g., to adapt for different type of windowpanes and window frames. Gas springs may also have a large and adaptable maximum extension and, in some cases, be telescopically constructed.

In one embodiment, the biasing elements may have an adjustable biasing force, providing an adjustable threshold force, which may be set individually for each biasing element, or be set jointly for all biasing elements. Depending on the window to be received, the threshold force may thereby be adjusted.

In one embodiment, the glass crushing elements may be configured to, when colliding with a window frame during movement of the glass crushing elements towards the window, be displaced relative the glass removing module towards the contracted position.

In one embodiment, the threshold force may be larger than the force acting on a glass crushing element by collision with said portion of a windowpane.

In one embodiment, the glass removal device may further comprise a driving unit configured to operate the movement of the glass crushing elements, and/or the glass removing module. Characteristics of the operation of the driving unit may be monitored to determine the operation of the device. The movement of the glass crushing elements and/or glass removing module may be based on the characteristics of the driving unit. Such characteristics may be power or current consumption of the driving unit. For instance, if a side of the window is reached by the glass crushing elements, such that a large amount glass crushing elements collides with the window frame, e.g. the glass crushing elements over a distance corresponding to the full width of the window, the power needed to move the glass crushing elements and/or glass removing module may increase. Such detection may indicate that an end of the window has been reached, and the glass crushing operation may be complete. The driving unit may be an electrical motor.

In a second aspect of the present invention, there is provided a method of removing glass of a windowpane from a window by means of a glass removal device according to the first aspect of the present invention. The method comprises the steps of receiving a window with a windowpane into said window receiving unit and moving the glass removing module towards said windowpane such that at least one first glass crushing element of said plurality crushes a portion of said windowpane. The method may imply the same advantageous as said glass removal device. With said method, glass of a windowpane may be efficiently removed from a window frame without demolishing the window frame.

In one embodiment, in the step of moving the glass removing module towards the window, at least one second glass crushing element of said plurality of glass crushing elements may collide with the window frame with a force larger that said threshold force, such that said second glass crushing element may be moved from its extended position to its contracted position. The force acting onto the window frame may be decreased, due to the movement of the glass crushing element, to such extent that the window frame is preserved.

In one embodiment, the crushed glass may be received in a container. The purity of received glass may be sufficiently high to recycle the crushed glass.

In one embodiment the method may further comprise a step of, after receiving said window and before moving the glass crushing elements towards said window, moving the glass crushing elements to a first position above a first portion of said window and, after moving the glass crushing elements towards said window to crush glass of the windowpane, moving the glass crushing elements towards a second position above a second portion of the window in a successive manner. In such manner different portions of a windowpane may be crushed by movement of the glass crushing elements, and/or glass removing module, between positions above different portions of the window, followed by movements towards respective portions of the window, such that glass of said portions may be crushed by the glass crushing elements.

For example, the window may be rectangular, the longitudinal direction may be vertical and the glass crushing elements may be distributed along a line that is longer than the width of the window. The glass crushing elements may, in this example, crush the portion of the pane closest to one window frame side first, thereafter, be moved upwards by the glass removing module, be moved a distance towards the opposite window frame side and then be moved downwards towards a second portion of the windowpane. The second portion of the windowpane may be sufficiently close to the first portion for substantially all glass between the first frame side and the second portion to be crushed, i.e., no glass is left intact between the second portion and the first frame side. The glass crushing elements may thereafter successively be moved to an area above a third portion of the window, thereafter downwards and so forth until the glass crushing elements crushes the glass closest to a second side of the window frame opposite said first frame, such that the entire windowpane is crushed.

In some embodiments, instead of moving the glass crushing elements as described in different embodiments above, the same result may be achieved by moving the window by means of e.g. the window receiving unit. In such embodiments, the glass removing module may be stationary except along the longitudinal direction of the glass crushing elements, and the window may be moved such that the glass crushing elements at different moments are arranged at different portions of the window.

In one embodiment it may be determined when the glass crushing elements reaches contact with the window and window frame both at start of a crushing operation when colliding with a first side of the window frame, and at end of the crushing operation when colliding with a second side of the window frame. When determining that glass crushing elements collide with the second side of the window frame, it may be determined that the full length of the window has been passed by the glass crushing elements, and the operation may stop. The determination of collision with such side of the window frame may be made by monitoring characteristics of a driving unit driving the movement of the glass crushing elements towards the window. When a large number of glass crushing elements collides with the window frame, more power may be needed to move the glass crushing elements (and/or glass removing module). By monitoring or measuring the power (current) consumed by such driving unit (e.g. an electric motor), it may be detected when such situation occurs. A determination that the crushing operation of the window is complete may be made based on such detection.

### Brief Description of the Drawings

The invention will in the following be described in more detail with reference to the enclosed drawings, wherein:
Fig. 1 shows a perspective view of a glass removing device according to an embodiment of the invention.
Fig. 2 shows a perspective view of a glass removing device according to an embodiment of the invention.
Fig. 3 shows a perspective view of a module of a glass removing device according to an embodiment of the invention.
Fig. 4 shows a perspective view of a module of a glass removing device according to an embodiment of the invention.
Fig. 5 shows a side view of a module of a glass removing device according to an embodiment of the invention.
Fig. 6 shows a perspective view of a module of a glass removing device according to an embodiment of the invention.
Fig. 7 shows a side view of a module of a glass removing device according to an embodiment of the invention.
Fig. 8 shows a side view of a module of a glass removing device according to an embodiment of the invention.
Fig. 9 shows a cross-sectional side view of a glass crushing element of a glass removing device according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

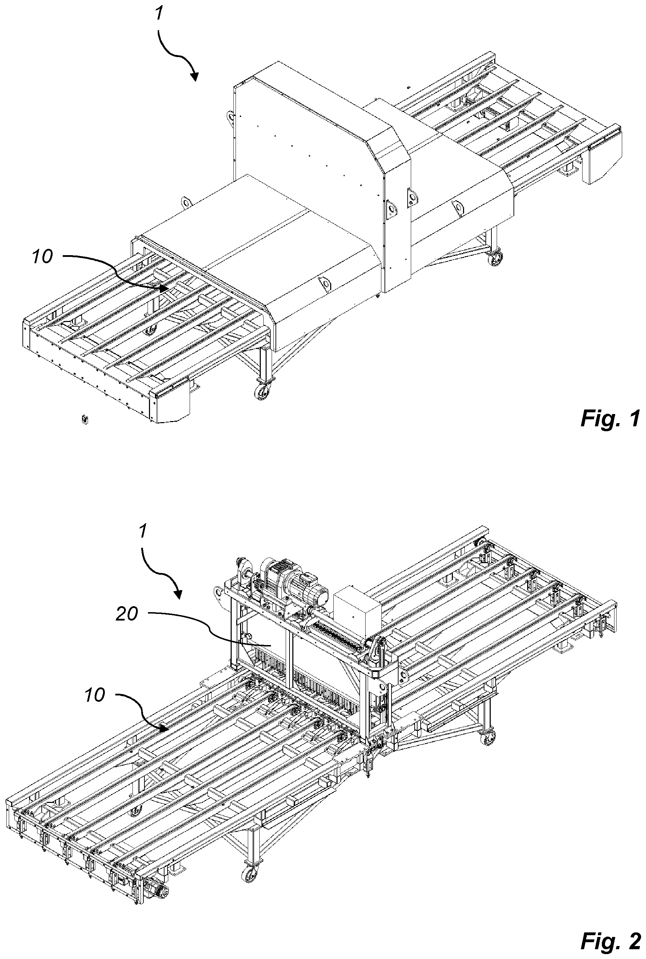

Figs. 1 and 2 illustrate a glass removing device 1 according to an embodiment of the invention, configured to receive a window frame 2 on a window receiving unit 10. The window receiving unit 10 may be formed in different ways. In the illustrated embodiment it is formed by a plurality of elongated beams, extending along a longitudinal extension of the glass removing device 1. The window receiving unit 10 is configured as an area where a user puts a window from which the glass is intended to be removed. The elongated beams of the window receiving unit 10 are arranged with a distance between each other to enable glass crushed to be removed from the window frame to fall down to a space below the window receiving unit 10 and the glass removing device 1. Below the glass removing device 1 there may be arranged a container to collect the removed glass.

As seen in fig. 1, the glass removing device may comprise a cover, covering a glass removing module 20, seen in fig. 1.

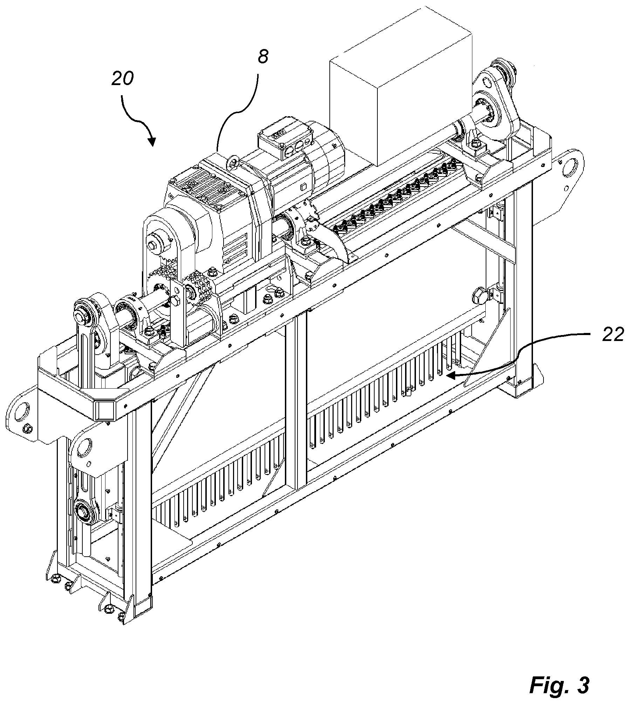

The glass removing module 20 is further illustrated in figs. 3-7. In fig. 3 the components of the glass removing module 20 is seen, such as glass crushing elements 22. The glass removing module 20 may further comprise, as illustrated in fig. 3, a driving arrangement 8 for controlling movement of the glass removing module 20 and/or the glass crushing elements 22. The glass crushing element 22 are formed as hard pins, preferably made of metal.

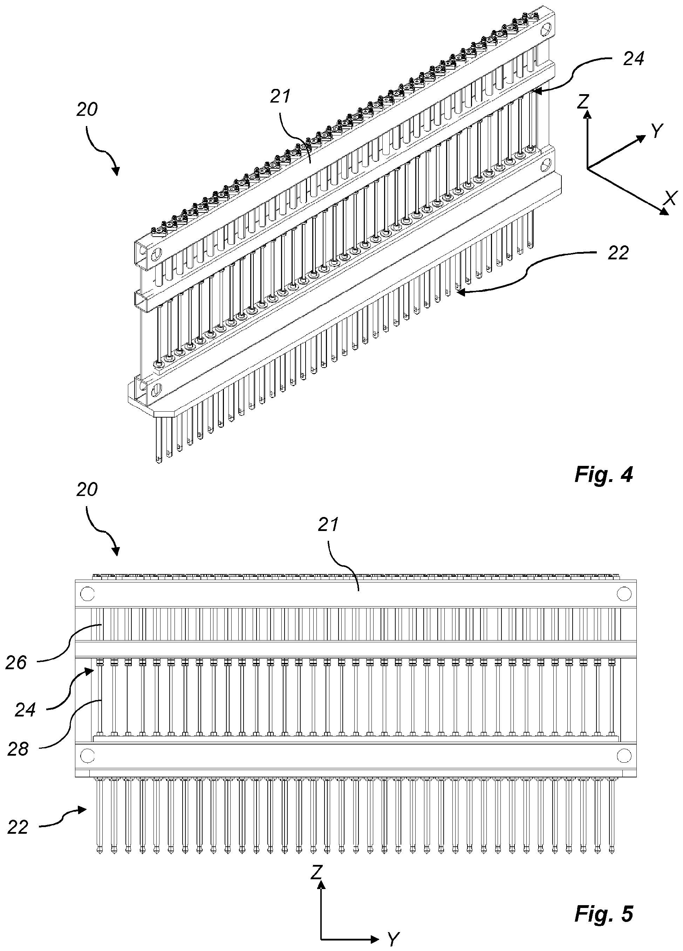

Figs. 4-7 illustrate a portion of the module 20, comprising a frame 21 onto which a plurality of glass crushing elements 22 are arranged. The glass crushing elements 22 are arranged at a bottom portion of the frame 21 and the glass removing module 20.

Each glass crushing element 22 is arranged to a biasing element 24. The biasing element 24 could be any kind of element providing a linear biasing function to the glass crushing element 22, such as a spring. In the illustrated embodiment the biasing elements 24 are provided as gas springs. The biasing elements 24 are in at least an upper end attached to the frame 21. Each biasing element 24 comprises a cylinder 26 and a piston rod 28. The cylinder 26 is attached to the frame 21. The piston rod 28 is in one end in engagement with the cylinder 26, and in the other end attached to one glass crushing element 22.

The biasing elements 24 provide that the glass crushing element 22 can move linearly along its longitudinal extension. In the illustrated embodiment, the longitudinal extension of the glass crushing elements 22 is along a vertical direction Z. The glass crushing elements 22 can thereby move from an extended position to a contracted position.

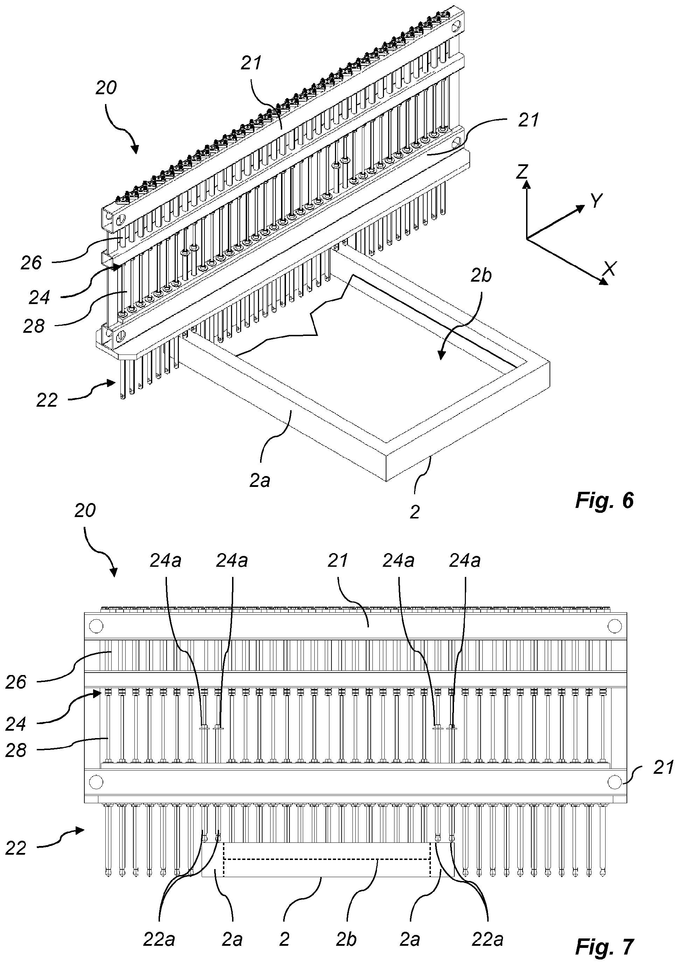

In figs. 6-7 it is illustrated how the glass crushing elements 22 operate to crush a windowpane 2b of a window 2 to remove the glass from the window frame 2a. The glass removing module 20 is moved or moves the frame 21 such that the glass crushing elements 22 are moved towards the window 2. The intention is to remove the glass of the windowpane 2b by means of the glass crushing elements 22 without damaging the window frame 2a, at least not in any extent such that parts of the window frame 2a are removed. The biasing force of the biasing elements 24 are therefore set such that the glass crushing elements 22 are not moved towards the contracted position by contact with the glass of the windowpane 2b, but are moved towards the contracted position by contact with the window frame 2a. The force needed to crush the glass may be lower than force required to move a glass crushing element 22 towards the contracted position.

As seen in figs. 6 and 7, glass crushing elements 22a that comes into contact with the window frame 2a are resilient by means of the biasing elements 24a such that they are moved to the contracted position. The window frame 2a is thereby not damaged while the glass of the windowpane 2b between the parts of the window frame 2a are crushed by the glass crushing elements 22 extending there.

When moving the glass crushing elements 22 towards the window 2 to crush the glass the module is moved, or moves the glass crushing elements 22, along a direction Z towards the window 2 on the window receiving unit 10. In the illustrated embodiment the direction Z is a vertical direction.

In order to remove all glass from the windowpane 2b in the window 2, the module 20 and/or the window 2 on the window receiving unit 10 may be moved along directions X and/or Y, being directions perpendicular to direction Z and perpendicular to each other. The directions X and Y may form a horizontal plane along which the module 20 and or the window 2 may be moved.

After the glass crushing elements 22 has been moved towards the window 2 at a first location, they are moved up (along direction Z), away from the window 2, followed by a movement to a new location in the X-Y plane at which they are moved towards the window 2 again. After repeating these steps, all glass of the windowpane 2b may have been removed from the window frame 2a.

In one embodiment, the glass crushing elements 22 and/or the window 2 are only moved along direction X when being moved to a new location for a new crushing operation.

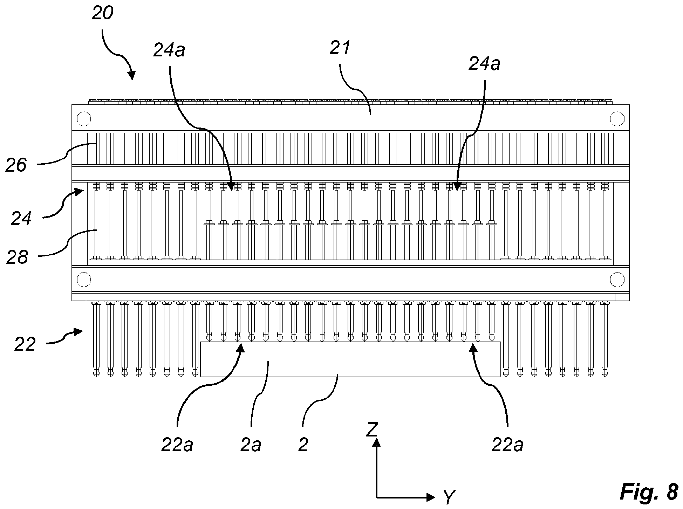

Fig. 8 illustrates a situation where a large number of glass crushing elements 22a collide with the window frame 2a, thereby being retracted towards the contracted position. In one embodiment of a method of removing glass from a window 2 using the glass removal device 1, a first position in the X-Y plane at which the glass crushing elements 22 are moved towards the window 2 to crush glass of the windowpane 2b may be as illustrated in fig. 8, wherein the glass crushing elements 22a along the full width of the window 2 collide with a first side of the window frame 2a. The position of the glass crushing elements 22 relative to the window 2 may then subsequently be moved, either by movement of the glass removing module 20, the glass crushing elements 22, and/or the window 2, along direction X towards a second side of the window frame 2a, opposite said first side. Following each crushing operation when the glass crushing elements 22 are moved towards the window 2 to crush glass of the windowpane 2b, the position may be moved a distance determined to provide a desirable amount of glass being crushed and removed from the window frame 2a. When reaching the second side of the window frame 2a, the glass crushing elements 22a along the full width of the window 2 may again collide with the window frame 2a.

It may further be determined when the glass crushing elements 22 reaches contact with the window 2 and window frame 2a both at start of the crushing operation when colliding with the first side of the window frame 2a, and at end of the crushing operation when colliding with the second side of the window frame 2a. When determining that glass crushing elements 22a collide with the second side of the window frame 2a, it may be determined that the full length of the window 2 has been passed by the glass crushing elements 22, and the operation may stop. The determination of collision with such side of the window frame 2 may be made by monitoring characteristics of a driving unit 8 driving the movement of the glass crushing elements 22 towards the window 2. When a large number of glass crushing elements 22a collides with the window frame 2a, as in the situation illustrated in fig. 8, more power may be needed to move the glass crushing elements (and/or glass removing module 20). By monitoring or measuring the power (current) consumed by such driving unit (e.g. an electric motor), it may be detected when such situation occurs. A determination that the crushing operation of the window 2 is complete may be made based on such detection.

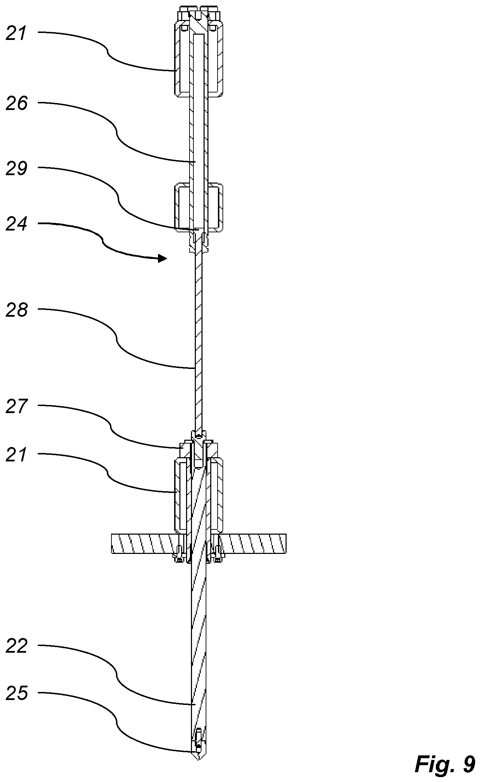

Fig. 9 illustrates a single glass crushing element 22 arranged to a biasing element 24 in the form of a gas spring. The biasing element 24 comprises a cylinder 26 attached to the frame 21 of the module 20 and a piston rod 28 moveable relative to the cylinder 26. The piston rod 28 is attached to a piston 29 inside the cylinder 26. The configuration of the components of the biasing element 24 sets the threshold force required for the glass crushing element 22 to be moved towards the contracted position. The glass crushing element 22 is attached to the piston rod 28. A lower part of the frame 21 comprises an opening through which the glass crushing element 22 extends. In connection with the opening there may be provided a bearing 27 configured to facilitate the movement and the motion control of the glass crushing element 22.

The glass crushing element 22 may be formed as a single solid unit attached to the piston rod 28, or, as in the illustrated embodiment, with an end portion 25 adapted in shape and material to provide as effective glass crushing operation as possible. For instance, the end portion may be sharp, pointy or acute, and the material may be chosen to be extra hard in order to effectively break the glass. In another embodiment, a corresponding shape and material may be used for the end portion 25, but integrated with the rest of the glass crushing element 22.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A glass removing device (1) for removing glass of a windowpane (2b) from a window (2), said device comprising
- a glass removing module (20);
- a window receiving unit (10) configured to receive a window (2) with a windowpane (2b);
- a plurality of glass crushing elements (22) arranged to said glass removing module (20) wherein said plurality of glass crushing elements (22) are configured to crush a portion of said windowpane (2b) of the window, received on said window receiving unit (10), by movement of said glass crushing elements (2) towards the windowpane,
wherein each glass crushing element (22) extends along a respective longitudinal direction (Z),
wherein at least one of the glass crushing elements (22) is movable with respect to said glass removing module (20) in the longitudinal direction (Z) between an extended position and a contracted position;
wherein each of said at least one glass crushing element (22) is attached to a biasing element (24) configured to bias said at least one glass crushing element (22) towards the extended position, such that the glass crushing element (22) is moved to the contracted position when a force beyond a threshold force of the biasing element (24) is applied on the glass crushing element (22) along said longitudinal direction (Z).

2. The device according to claim 1, wherein said glass removing module (20) is movable along said longitudinal direction (Z) and at least one direction (X, Y) perpendicular to said longitudinal direction.

3. The device according to any preceding claim, wherein said glass removing module (20) is movable in three perpendicular directions (X, Y, Z).

4. The device according to any preceding claim, wherein all of said plurality of glass crushing elements (22) are movable with respect to said glass removing module (20) along the respective longitudinal direction (Z).

5. The device according to any preceding claim, wherein said window receiving unit (10) comprises at least one opening configured to allow crushed glass to fall through.

6. The device according to any preceding claim, wherein the glass crushing elements (22) comprises an end portion (25) configured to crush said portion of glass.

7. The device according to any preceding claim, wherein the glass removing module (20) comprises a frame (21) comprising a plurality of recesses configured to accommodate said plurality of glass crushing elements (22).

8. The device according to any preceding claims, wherein the at least one glass crushing element (22) comprises a stop portion configured to stop an extension movement of said element when said stop element reaches said recess unit.

9. The device according to any preceding claims, wherein the biasing element (24) is a gas spring.

10. The device according to any preceding claims, wherein said longitudinal direction (Z) is a vertical direction.

11. The device according to any preceding claim, wherein the glass crushing elements (22) are configured to, when colliding with a window frame (2a) during movement of the glass crushing elements (22) towards the window (2), be displaced relative the glass removing module (20) towards the contracted position.

12. The device according to any preceding claim, wherein said threshold force is larger than the force acting to a glass crushing element (22) by collision with said portion of a windowpane (2b).

13. A method of removing glass of a windowpane (2b) from a window (2) by means of a device (1) according to any of the preceding claims, said method comprising the steps of:
- receiving a window (2) with a windowpane (2b) into said window receiving unit (10);
- moving the glass removing module (20) towards said windowpane (2b) such that at least one first glass crushing element of said plurality crushes a portion of said windowpane.

14. The method according to claim 13, wherein, by the step of moving the glass removing module (20) towards the window (2), at least one second glass crushing element (22a) of said plurality of glass crushing elements (22) collides with a window frame (2a) of the window (2) such that a force larger than said threshold force affects the second glass crushing element (22a), causing said second glass crushing element (22a) to move from its extended position to a contracted position.

15. The method according to claim 13 or 14, further comprising a step of, after receiving said window (2) and before moving the glass removing module (20) towards said window (2), moving the glass removing module (20) to a first position above a first portion of said window (2) and, after moving the glass crushing elements (22) towards the window (2) to crush glass of the windowpane (2b), moving the glass removing module (20) to a second position above second portion of the window, and moving the glass crushing elements (22) towards said window (2) at the second portion of the window (2).
